Europäisches Patentamt

European Patent Office

Office européen des brevets

(11) Veröffentlichungsnummer: **0 146 060**
**B1**

(12) **EUROPÄISCHE PATENTSCHRIFT**

(45) Veröffentlichungstag der Patentschrift:
**01.03.89**

(21) Anmeldenummer: **84114613.7**

(22) Anmeldetag: **01.12.84**

(51) Int. Cl.⁴: **B 29 B  9/16,** B 29 B  13/00

(54) **Austragsvorrichtung für Granulate.**

(30) Priorität: **09.12.83  DE 3344558**

(43) Veröffentlichungstag der Anmeldung:
**26.06.85 Patentblatt 85/26**

(45) Bekanntmachung des Hinweises auf die Patenterteilung:
**01.03.89 Patentblatt 89/9**

(84) Benannte Vertragsstaaten:
**AT BE CH DE FR GB IT LI NL SE**

(56) Entgegenhaltungen:
**CH-A- 454 005**
**DE-A- 2 636 521**
**GB-A- 123 646**
**US-A- 4 197 660**

(73) Patentinhaber: **HOECHST AKTIENGESELLSCHAFT,
Postfach 80 03 20, D-6230 Frankfurt am Main 80 (DE)**

(72) Erfinder: **Keiler, Manfred, Johannes-Brahms-Strasse 12,
D-8902 Neusäss (DE)**
Erfinder: **Bartsch, Uwe, Ahornweg 4, D-8857 Wertingen
(DE)**
Erfinder: **Drösemeyer, Hans-Heinrich,
Alemannenstrasse 8, D-8901 Batzenhofen (DE)**
Erfinder: **Reitsam, Franz Xaver, Dr.,
Wertachbrucker-Tor-Strasse 3a, D-8900 Augsburg (DE)**

**Beschreibung**

Die vorliegende Erfindung betrifft eine Austragsvorrichtung für Granulate gemäß dem Oberbegriff des Patentanspruchs 1.

Eine derartige Vorrichtung ist aus DE-C-2 558 730 bekannt.

Es ist bereits bekannt, daß manche Kunststoffgranulate beim Trocknen zum Verkleben, zur Agglomeratbildung neigen, was zu großen Schwierigkeiten beim Austrag aus dem Reaktor führt. Es sind eine Reihe von Lösungsvorschlägen bekannt, diese Agglomeratbildung zu vermeiden.

Das mehrfach in der Literatur empfohlene Rühren der Granulatmasse, wie es z.B. in der deutschen Patentschrift 2 918 675 beschrieben wird, führt zu Abrieb und Staub, der beim Schmelzspinnen, speziell zu synthetischen Filamenten, immer wieder störend wirkt.

Die deutsche Offenlegungsschrift 2 559 290 beschreibt ein Verfahren, bei dem Polyestergranulat bei Temperaturen zwischen 220 und 260 °C kristallisiert wird, um so ein Verbacken in der anschließenden Feststoffkondensationszone zu vermeiden. Derartig hohe Kristallisationstemperaturen führen aber zu hydrolytischem Abbau des Polyesters, da die Diffusion des Wassers aus dem Polymer durch die Kristallisation deutlich verlangsamt wird. Ferner verbacken auch die so vorkristallisierten Granulate noch, zwar in einem geringeren aber noch störenden Umfang, bei der Feststoffkondensation.

Die deutsche Patentschrift 2 558 730 geht einen völlig andersartigen Weg, dort wird die Verklebung beim Trocknen des Granulats zugelassen, der so gebildete Granulatagglomeratklotz wird schichtenweise von unten abgetragen und als wieder rieselfähiges Granulat ausgetragen. Die dazu geeignete Vorrichtung besteht aus einem einfachen stehenden zylindrischen Reaktor, der einen um seine vertikale Achse drehenden, ebenen oder konischen Anströmboden besitzt, der sich annähernd bis zur Wand des Behälters erstreckt, und bei dem der Anströmboden an seiner Oberseite Abstreifkanten aufweist und mit Austragsschlitzen versehen ist.

Voraussetzung für dieses beschriebene Verfahren ist ein fest gebackener Klotz von Granulat. Beim Anfahren des Trockners muß zuerst eine Mindestmenge von Granulat im Reaktor zusammengebacken werden, oder man beläßt beim Abstellen einen verbackten Restpfropfen im Reaktor.

Dieses Verfahren eignet sich somit nicht zur Feststoffkondensation getrockneten Polyesteroder auch Polyamidgranulats, da dort keine hinreichende Verbackung mehr auftritt.

Das Verfahren nach der deutschen Patentschrift 2 558 730 ist also auf verbackende Granulate beschränkt, bzw. auf Verfahrenstemperaturen, bei denen das Verbacken auftritt, und ergibt ausgeprägte Anfahr- und Abstellverluste.

Die vorliegende Erfindung soll deshalb eine Vorrichtung zum Trocknen, Kristallisieren oder Feststoffkondensieren von Kunststoffgranulaten mit Hilfe von senkrecht stehenden Reaktoren zur Verfügung stellen, die eine freie Wahl der Verfahrensparameter gestattet, auch ohne festes Verbacken des Granulats arbeitet, bei der aber das Verbacken oder Agglomerieren auch nicht stört, und die Anfahr- und Abstellverluste vermeidet.

Hierzu dient eine Austragsvorrichtung aus dem senkrecht stehenden Reaktor mit einem ebenen Anströmboden (2), der an seiner Oberseite Abstreifkanten oder -stifte (11) aufweist und mit mindestens einem Austragsschlitz (5) versehen ist, wobei erfindungsgemäß unterhalb jedes Austragsschlitzes eine Auffangvorrichtung (3) angeordnet ist, die mit dem Austragsschlitz (5) fest verbunden ist und sich gemeinsam mit ihm dreht, und zwischen Austragsschlitz (5) und Auffangvorrichtung (3) eine ortsfeste Abstreifvorrichtung (9) angeordnet ist.

In einer bevorzugten Ausführungsform des Austragsschlitzes (5) ist dieser an seiner Unterseite mit im wesentlichen senkrechten Wänden versehen und so als Austragsschacht ausgebildet.

Der Anströmboden (2) ist bevorzugt als Siebboden mit mehr als 10%, besonders bevorzugt mehr als 25% freier Fläche ausgebildet, wobei selbstverständlich die Lochgröße des Siebbodens kleiner sein muß als das zu bearbeitende Granulat.

An seiner Oberfläche trägt der Anströmboden bevorzugt Auflockerungsvorrichtungen in Form von festverbundenen Stiften (11) oder sonstigen Erhebungen.

Die Abstreifvorrichtung (9) ist bevorzugt als feststehendes Speichenrad gestaltet. Der senkrechte Abstand dieses Abstreifers (9) nach oben zum Ende des Austragsschachtes (6) und nach unten zur Auffangvorrichtung (39) liegt in der Größenordnung der Granulatabmessungen.

Die Auffangvorrichtung (3) besteht im wesentlichen aus einem waagerechten Auffangblech, dessen Breite so gewählt wird, daß die zwischen zwei Abstreifvorgängen anfallende Granulatmenge aufgenommen werden kann.

Die Abmessungen des Austragsschlitzes (5), des Austragsschachtes (6), des Abstreifers (9) und der Auffangvorrichtung (3) werden der Granulatgröße, d.h. dem Schüttwinkel angepaßt.

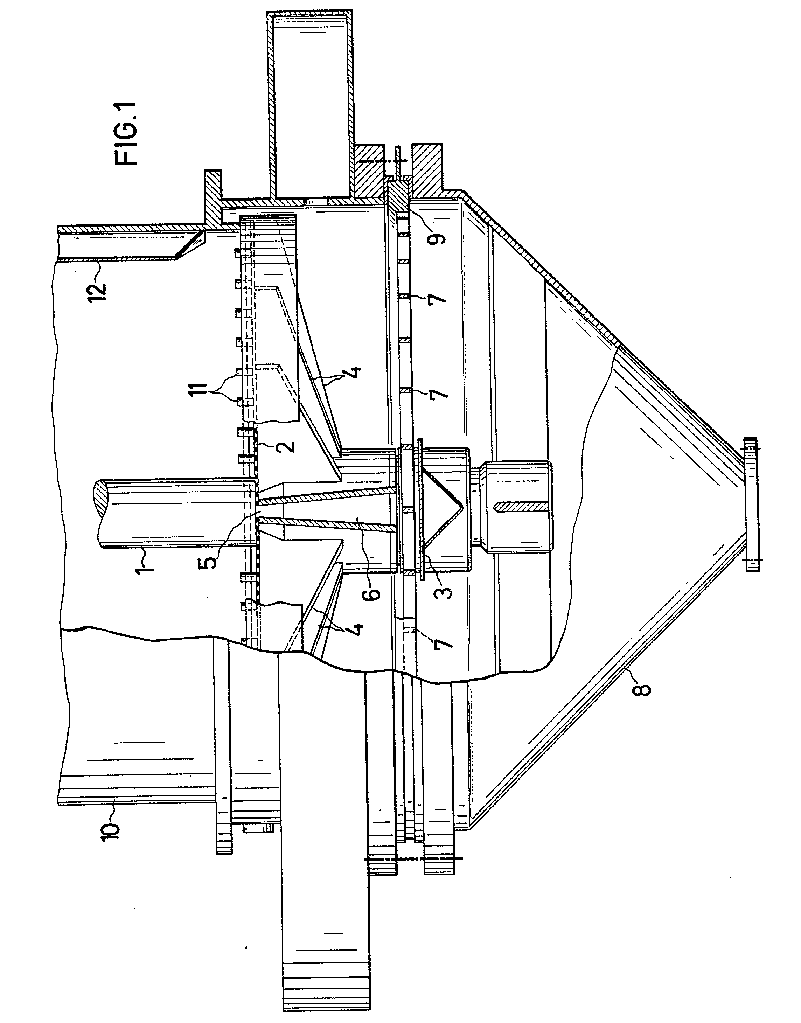

Die Figuren zeigen eine bevorzugte Ausführungsform der erfindungsgemäßen Vorrichtung, Fig. 1 zeigt das untere Ende eines senkrecht stehenden Reaktors, der sowohl als Trockner und Kristallisierer als auch als Feststoffkondensator benutzt werden kann.

Fig. 2 zeigt eine Aufsicht auf den Anströmboden (2),

Fig. 3 zeigt eine Aufsicht auf die Abstreifvorrichtung (9),

Fig. 4 zeigt eine Aufsicht auf die Auffangvorrichtung (3).

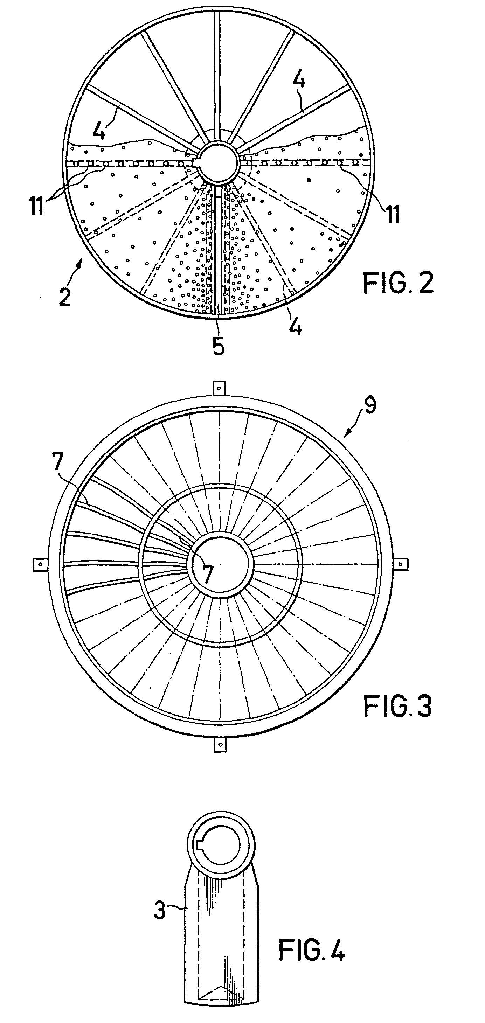

Das Granulat wird durch einen Stutzen in dem Reaktor (10) eingefüllt; im stationären Zustand erfüllt das Granulat den senkrechten Reaktorraum bis zu einem Glattstreicher, der auf der selben Welle (1) sitzt, wie der Anströmboden (2) und die Auffangvorrichtung (3), die in Fig. 4 sichtbar wird. Der Anströmboden (2) besteht aus einem siebartigen Lochblech und trägt Versteifungsrippen (4) an seiner Unterseite. Die freie Fläche liegt hier bei 30%, die Lochgröße bei etwa 2 mm, bei 4 mm Kantenlänge des Granulats. Das Trockengas, meist gereinigter Stickstoff, tritt durch diesen Siebboden (2) in die Granulatsäule ein. In den Wänden des Reaktors sind Strombrecher (12) befestigt, die verhindern, daß sich die Granulatsäule mit dem Anströmboden (2) mitdreht. Der Anströmboden besitzt an seiner Oberfläche Abstreifkanten oder -stifte (11), die das Granulat von der Unterseite des mehr oder weniger verbackenen Granulatpfropfens ablösen. Das abgelöste Granulat rieselt nun durch den Austragsschlitz (5) in den Austragsschacht (6), dessen beide Wände sich schwach konisch öffnen. Das Granulat fällt dabei auf die Auffangvorrichtung (3). Der dort gebildete Granulathügel wird beim Drehen von Austragsschlitz (5) und Auffangvorrichtung (3) von den Speichen (7) der feststehenden Abstreifvorrichtung (9) exakt volumetrisch abgeworfen und fällt durch den Trichter (8) in die nächste Verarbeitungsstufe. Es ist deshalb wichtig, daß die Auffangvorrichtung (3) groß genug gestaltet wird, um die Granulatmenge aufzunehmen, die zwischen zwei Abstreifvorgängen angeliefert wird. Der senkrechte Abstand zwischen Abstreifer (9) und Austragsschacht (6) bzw. Auffangvorrichtung (3) muß so groß sein, daß ein Einklemmen des Granulats vermieden wird.

Der Granulatzulauf in den Reaktor kann durch Zellenradschleusen durchgeführt werden, es reicht aber meist die Zufuhr über ein Steckrohr.

Der Vorteil der erfindungsgemäßen Vorrichtung beruht darauf, daß durch diese Austragsvorrichtung sowohl lose Schüttungen von Granulaten als auch leicht verbackene und sogar vollständig agglomerierte Granulate aus senkrecht stehenden Reaktoren (10) ausgetragen werden können. Diese Reaktoren (10) können somit als Trockner, Kristallisierer und Feststoffkondensationsreaktoren benutzt werden, auch für empfindliche Polymere, bei denen die Wahl der Verfahrenstemperatur durch Kristallisationsgeschwindigkeit der Polymere, Diffusionsgeschwindigkeit des Wassers im Polymer und thermischer und hydrolytischer Abbau stark eingeschränkt ist. Es ergibt sich ein homogenes Verweilzeitspektrum. Der Anströmboden (2) ergibt eine nahezu ideale Gasverteilung über den Querschnitt des Reaktors und damit eine nahezu ideale Temperaturverteilung mit der daraus resultierenden Gleichmäßigkeit des feststoffkondensierten Granulats.

In den Figuren und im Text bedeuten
1 Welle, 2 Anströmboden, 3 Auffangvorrichtung, 4 Versteifungsrippen, 5 Austragsschlitz, 6 Austragsschacht, 7 Speichen, 8 Trichter, 9 Abstreifvorrichtung, 10 Reaktor, 11 Abstreifkanten oder -stifte und 12 Strombrecher.

Beim Anfahren des Reaktors und beim Leerfahren entstehen keine Anfahr- und Abstellverluste, wenn z. B. beim Anfahren so lange mit dem Granulataustrag gewartet wird, bis die stationäre Verweilzeit erreicht ist. Der Granulataustrag über die erfindungsgemäße Vorrichtung ist volumetrisch, weitere Dosiervorrichtungen, wie etwa Zellenradschleusen sind nicht notwendig. Die Vorteile der erfindungsgemäßen Vorrichtung zeigen sich besonders auch in kontinuierlichen Feststoffkondensationsvorrichtungen, wo mehrere, weitgehend baugleiche Reaktoren als Trockner und Kondensatoren hintereinandergeschaltet sind. Dieser Einsatz baugleicher Reaktoren erleichtert die Instandsetzung und die Ersatzteillagerhaltung.

Beispiel

Eine kontinuierlich betreibbare Anlage zur Feststoffkondensation besteht aus zwei hintereinandergeschalteten baugleichen Reaktoren mit folgenden Abmessungen:

Anströmboden (2) (2 mm stark) mit Löchern des Durchmessers von 2,0 mm im Dreiecksabstand von 3,5 mm (30% freie Fläche). Ein Austragsschlitz mit darunter angebrachtem «Schwert» als Auffangvorrichtung (3) zur Vermeidung des Durchrieselns. Anströmboden (2) und «Schwert» (3) sind fest verbunden und werden über eine Welle (1) angetrieben. Das Speichenrad (Abstreifvorrichtung 9) hat 36 leicht gekrümmte (Kompensation der Wärmeausdehnung) Speichen (7) und ist fest mit dem Reaktor (10) verbunden. Die Schnitzeloberfläche wird mit Hilfe von Glattstreicherarmen eingeebnet. Mit Hilfe einer Ansteckwelle kann die Drehzahl gegenüber der Hauptwelle (Drehteller) erhöht werden. Die Chips werden mit einem Zellrad in den Reaktor (10) eingetragen und zwar durch den Gasaustritt, wodurch eine zusätzliche Entstaubung stattfindet. Sowohl das Zellrad nach dem Austragskonus als auch das im Zulauf gewährleisten den Gasabschluß. Der verwendete $N_2$ wird kontinuierlich ausgeschleust und gereinigt.

| Ø 1,5 m | Schütthöhe | 3,2 m |
|---------|------------|-------|
|         | Verweilzeit | ca. 4,5 h |
|         | Durchsatz | 1000 kg Granulat/h |

Eingesetzt wurde Polyethylenterephthalat-Granulat der spezifischen Viskosität = 0,83 in einer 1 Gew.-% Lösung von Phenol/Tetrachlorethan 3:2 bei 25°C mit einem Carboxylgruppengehalt von 15 mMol/kg und äußeren Abmessungen $d_1$ = 2,5 mm, $d_2$ = 3,5 mm, l = 4,0 mm, sogenanntes Nudelgranulat.

Die Eingangstemperatur des Stickstoffs in dem Trockner lag bei 180°C, die Austrittstemperatur bei 100°C. Der Gasdurchsatz lag bei 2 $m_N^3$/kg Polyethylenterephthalat. Die erzielte Dichte lag bei 1,385 $g/cm^3$.

Ebenso gute Ergebnisse erbrachte Trocknung mit 140°C Stickstoffeingangstemperatur bei einem Stickstoffdurchsatz von 3 $m_N^3$/kg Polyestergranulat. Die erreichte Dichte lag ebenfalls bei 1,375 $g/cm^3$.

Die Feststoffkondensation wurde unmittelbar anschließend unter zwei unterschiedlichen Bedingungen durchgeführt:

1. Mittlere Feststoffkondensations-Temperatur
   Gaseingang      ca. 235°C
   Gasmenge        ca. 2500 $m_N^3$/h
   Endviskosität η   spez. = 1,02

2. Hohe Feststoffkondensations-Temperatur
    Gaseingang      250 °C
    Gasmenge      ca. 2500 $m_N^3$/h
    (entspr. 0,75 m/s Leerrohrgeschwindigkeit)
    Endviskosität $\eta$    spez. = 1,12

## Patentansprüche

1. Austragsvorrichtung für Granulate, aus einem Reaktor zum Trocknen, Kristallisieren oder Feststoffkondensieren von Kunststoffgranulaten, der aus einem senkrecht stehenden Reaktor (10) mit einem drehbaren, ebenen Anströmboden (2) besteht, der an seiner Oberseite Abstreifkanten oder -stifte (11) aufweist und mit Austragsschlitzen (5) versehen ist, dadurch gekennzeichnet, daß unterhalb jedes Austragsschlitzes (5) eine Auffangvorrichtung (3) angeordnet ist, die mit dem Austragsschlitz (5) über eine Welle (1) fest verbunden ist und sich daher in gleicher Weise wie der Austragsschlitz (5) bewegt, und zwischen Austragsschlitz (5) und Auffangvorrichtung (3) eine ortsfeste Abstreifvorrichtung (9) angeordnet ist.

2. Vorrichtung nach Anspruch 1, dadurch gekennzeichnet, daß der Austragsschlitz (5) an seiner Unterseite mit im wesentlichen senkrechten Wänden versehen ist und so als Austragsschacht (6) ausgebildet ist.

3. Vorrichtung nach Ansprüchen 1 und 2, dadurch gekennzeichnet, daß der Anströmboden (2) als Siebboden mit mehr als 10%, bevorzugt mehr als 25%, freier Fläche ausgebildet ist.

4. Vorrichtung nach Ansprüchen 1 bis 3, dadurch gekennzeichnet, daß die Abstreifvorrichtung (9) als feststehendes Speichenrad ausgebildet ist.

## Claims

1. A discharge device for granules from a reactor for drying, crystallization or solid-state condensation of plastics granules, comprising a vertical reactor (10) with a rotatable plane blower plate (2) which possesses scraper edges or pins (11) on its upper face and is provided with discharge slots (5), wherein below each discharge slot (5) there is located a collecting device (3) which is fixedly connected to the discharge slot (5) via a shaft (1) and therefore moves conjointly with the slot (5), and a static scraping device (9) is located between the discharge slot (5) and the collecting device (3).

2. A device as claimed in claim 1, wherein the discharge slot (5) has substantially vertical walls on its underside and is thus in the form of a discharge chute (6).

3. A device as claimed in claim 1 or 2, wherein the blower plate (2) is constructed as a screen plate with more than 10%, preferably more than 25%, free surface area.

4. A device as claimed in any of claims 1 to 3, wherein the scraping device (9) is constructed as a static spoke wheel.

## Revendications

1. Dispositif d'extraction pour granulés, destiné à extraire des granulés d'un réacteur servant au séchage, à la cristallisation, à la condensation solide de granulés de matière plastique qui est composé d'un réacteur (10) vertical fixe équipé d'un fond soufflant plat rotatif (2) qui présente des arêtes ou doigts racleurs (11) sur sa face supérieure et est muni de fentes d'extraction (5), caractérisé en ce qu'au-dessous de chaque fente d'extraction (5), est agencé un dispositif collecteur (3) qui est fixé rigidement à la fente d'extraction (5) par l'intermédiaire d'un arbre (1) et se déplace donc de la même façon que la fente d'extraction (5), et un dispositif racleur (9) est interposé entre la fente d'extraction (5) et le dispositif collecteur (3).

2. Dispositif selon la revendication 1, caractérisé en ce que la fente d'extraction (5) est munie sur sa face inférieure de parois sensiblement verticales et forme ainsi un puits d'extraction (6).

3. Dispositif selon les revendications 1 et 2, caractérisé en ce que le fond soufflant (2) est constitué par un fond perforé présentant plus de 10%, de préférence plus de 25%, de surface libre.

4. Dispositif selon les revendications 1 à 3, caractérisé en ce que le dispositif racleur (9) est constitué par une roue à rayons fixe.

FIG.1

FIG. 2

FIG. 3

FIG. 4